# EUROPEAN PATENT APPLICATION

(11) **EP 1 688 887 A2**
(43) Date of publication of application: **09.08.2006**
(21) Application number: 06101112.8
(22) Date of filing: 31.01.2006
(51) Int. Cl.: G07B 17/00

(54) **Mail consolidation tool**

(30) Priority: 31.01.2005 US 648585 P; 14.10.2005 US 251605
(71) Applicant: NEOPOST TECHNOLOGIES, 92220 Bagneux (FR)
(72) Inventor: Fenelon, James M., Dripping Springs TX 78620-4130 (US)
(74) Representative: David, Alain

(57) **Abstract**

a mail consolidation system. The system includes a delivery option integration device with a user interface that allows a user to enter shipping address information for a mailpiece into the integration device. A shipment analysis device uses the shipping address information to determine a best delivery service for the mailpiece. An internal carrier review engine determines if an internal carrier service is available to deliver the mailpiece and a comparison unit determines a best delivery mode by comparing the best delivery service option against the internal carrier service availability.

## Description

### BACKGROUND OF THE INVENTION

### 1.Field of the Invention

The present invention generally relates to a mail consolidation tool, and in particular to an InterCompany mail consolidation tool.

### 2. Brief Description of the Related Developments

Determining shipping options for a package delivery can be a time consuming process. It can be difficult to determine, when sending a package or other items, the best and least expensive method for delivery.

It would be advantageous to be able to inform users of alternative shipping options (pouch and fleet) when those options are available. The use of internal carrier options instead of processing "one-off" shipments using a major carrier service can yield significant cost savings to organizations.

Some definitions as used herein include:

IC - Stands for "Internal Carrier". An IC shipment involves package delivery by a provider other than a major carrier or by a consolidated shipment that may or may not be processed by one of the major carriers. IC shipments are typically sent to the mailroom to be completed by a Mailroom Administrator.

Consolidated Shipment - Used to describe a single shipment that comprises of many individual shipments that are all going to the same destination address.

Pouch - A type of IC shipment that will be combined with other packages into a "consolidated shipment". Pouch shipment packaging type can be either letter or custom box and clients typically have unique shipping logic they wish to apply to IC Pouch shipping.

Fleet - A type of IC shipment delivered by an entity directly or indirectly controlled by the client organization (typically refers to a delivery service provider that is not a major carrier). Fleet shipments can be either letter or custom box. It is anticipated that clients and prospects will have unique shipping logic they wish to apply to IC Fleet shipping (i.e. weight minimums or maximums for Fleet shipments.)

Private Fleet - Refers to shipments handled internally. (i.e., a mailroom facility of a business, company, or other type of organization that has mailroom needs.)

IC Shipping Label - Shipping label produced that is different from carrier compliant labels. IC Shipping labels are produced exclusively by the application and adhere only to NL1 requirements. IC shipping labels refer to labels generated for any Pouch or Fleet IC service.

Mailroom Administrator ("Admin") - Any user who works in a client organization's mailroom and is assumed to be a "power", "administrative" or otherwise more proficient "user" of and more knowledgeable than Desktop Users about shipping processes and applications.

Desktop User - The vast majority of users who process one-off shipments.

IC Search Operation - The term given to the operation that reviews a specific client's IC route/transit data to ascertain if an IC service is available.

FBS - Final Best Service.

### SUMMARY OF THE INVENTION

The present invention is directed to a mail consolidation system. In one embodiment, the system includes a delivery option integration device with a user interface that allows a user to enter shipping address information for a mailpiece into the integration device. A shipment analysis device uses the shipping address information to determine a best delivery service for the mailpiece. An internal carrier review engine determines if an internal carrier service is available to deliver the mailpiece and a comparison unit determines a best delivery mode by comparing the best delivery service option against the internal carrier service availability.

### BRIEF DESCRIPTION OF THE DRAWINGS

The foregoing aspects and other features of the present invention are explained in the following description, taken in connection with the accompanying drawings, wherein:

FIG. 1 is a block diagram of one embodiment of a system incorporating features of the present invention.

FIG. 2 is one embodiment of user interface incorporating features of the present invention.

FIG. 3 is one embodiment of a user interface incorporating features of the present invention used to display delivery options.

FIG. 4 is one embodiment of a user interface incorporating features of the present invention used to find the access delivery service options.

FIG. 5 illustrates one embodiment of a user interface incorporating features of the present invention used to access delivery service options.

FIG. 6 is a flowchart of one embodiment of a process incorporating features of the present invention used to identify delivery service options.

FIG. 7 is a flowchart of another embodiment of a process incorporating features of the present invention that can be used to identify delivery service options.

FIG. 8 is an illustration of date and address tables that can be used to evaluate and identify delivery service options in one embodiment of the present invention.

FIG. 9A is an illustration of one embodiment of a user interface incorporating features of the present invention that can be used to present and select delivery service options.

FIG. 9B is an illustration of another embodiment of a user interface incorporating features of the present invention that can be used to present and select delivery service options.

FIG. 10 is an illustration of one embodiment of a label that can be produced by a system incorporating features of the present invention.

FIG. 11 is an illustration of one embodiment of a user interface incorporating features of the present invention that can be used to present and select delivery service options.

FIG. 12 is an illustration of another embodiment of a user interface incorporating features of the present invention used to present and select delivery service options.

FIG. 13 illustrates one embodiment of an internal carrier label produced by a system incorporating features of the present invention.

FIG. 14 illustrates one embodiment of a user interface incorporating features of the present invention that can be used to track and create consolidated shipments.

FIG. 15 is an illustration of another embodiment of a user interface incorporating features of the present invention that can be used to create consolidated shipments.

FIG. 16 is an illustration of another embodiment of a user interface incorporating features of the present invention that can be used to create consolidated shipments.

FIG. 17 is an illustration of another embodiment of a user interface incorporating features of the present invention that can be used to create and track consolidated shipments.

FIG. 18 is one embodiment of an architecture that can be used to practice the features of the present invention.

### DETAILED DESCRIPTION OF THE PREFERRED EMBODIMENT(S)

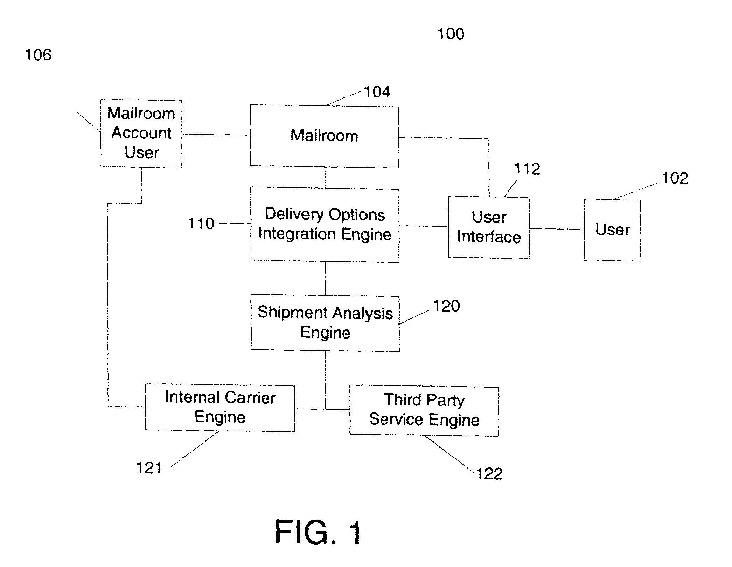

Referring to FIG. 1, one embodiment of a system 100 incorporating features of the present invention is illustrated. Although the present invention will be described with reference to the embodiment shown in the drawings, it should be understood that the present invention can be embodied in many alternate forms of embodiments. In addition, any suitable size, shape or type of elements or materials could be used.

The embodiments of the present invention generally allows a user to evaluate shipping options by presenting delivery information to them that allows them to discover if an Internal Carrier option is a viable alternative to one-off shipping with a major carrier.

The disclosed embodiments will allow a user, or client, to track internal carrier pouch shipments. The disclosed embodiments will also allow a user to generate and use specialized internal carrier shipping labels that are generated by the system of the disclosed embodiments, which will ensure at least a revenue stream for these transactions.

As shown in FIG. 1, the system generally comprises a mail system 100 that allows a user to prepare an item for shipment using a delivery service. The system can identify if the shipment can travel via a company logistics system rather than a third party carrier. The system 100 generally includes a delivery options integration engine 110 that allows a user to evaluate shipping options, including internal carrier delivery options, for shipping of the particular item or items. A user interface 112 allows the user 102 to connect and communicate with a shipment analysis engine 120. The shipment analysis engine 120 allows a desktop user 102 to communicate with a mailroom 104. For example, a corporate mailroom might have one mailroom administrator account that is accessible by more than one mailroom user (e.g. employee). Generally, one mailroom administrator will be responsible for the preparation of and completion of a Pouch IC shipment (start to finish). In this situation, there is no need to provide visibility to a multiple user accounts. In an integrated environment, visibility to more than one user account could be provided.

The user interface 112 allows a user, whether it be a mailroom account 106 or a desktop user 102, to access the features of the disclosed embodiments.

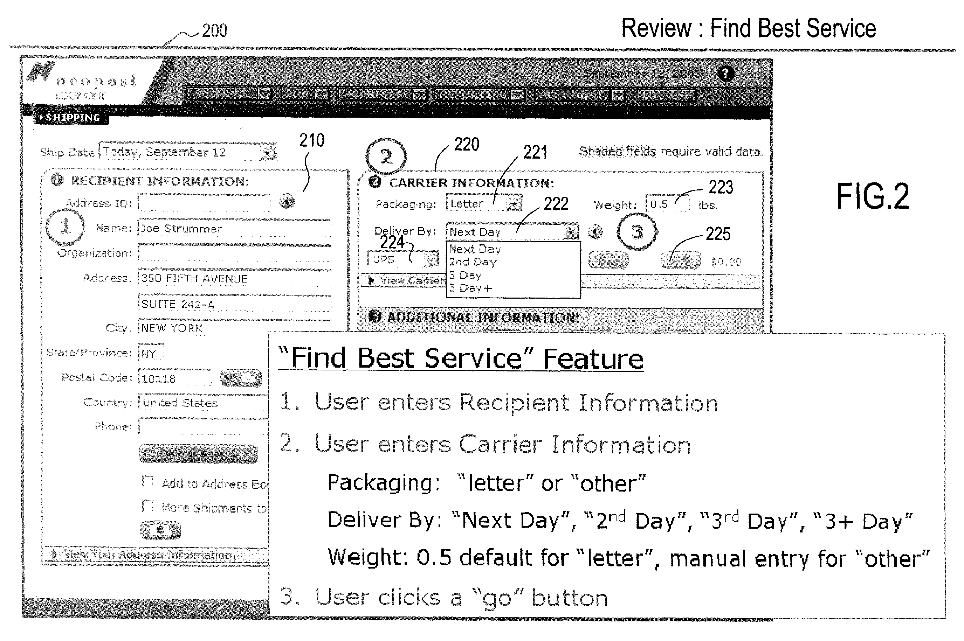

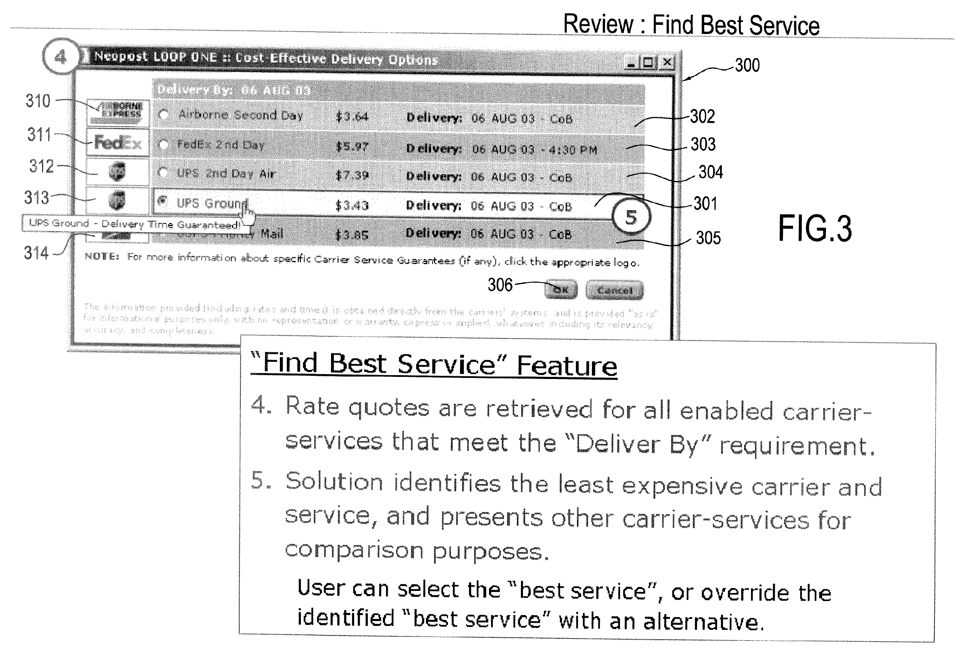

The user interface 112, which can comprise a graphical user interface, allows a user to enter address information and access the features of the disclosed embodiments. The best service and rate information from outside third-party carrier services can be obtained from a third party services engine 121 as well as determining internal carrier availability and service from a internal carrier services engine 122. For example, the user interface 112 allows a user 102 to enter information about the shipment into the delivery options engine 110. The delivery options engine 110 allows the user 102 or mailroom 104 to identify if a shipment can travel via a company system or if a third-party shipper is needed. For example, in one embodiment, if a user 102 enters an address as part of their shipping process, the delivery options engine 110 can compare the entered address against a list of internal addresses. The delivery options engine 110 can then determine if the user 102 can send the item to be mailed or shipped via for example "inter-fleet" (corporate trucks), a company pouch, which could be a third-party carrier, or by a city or other courier. The system 100 can determine the optimum shipping method from both a cost and efficiency standpoint. The system 100 can also track company pouch shipments together with the items or packages within the pouch. For example, referring to FIG. 2, one embodiment of a user interface 200 in a system incorporating features of the present invention is illustrated. In one embodiment, the user can enter recipient information in fields 210. Carrier information can be entered in fields 220. The carrier information can include for example, "Packaging" 221, "Delivery By" 222, "Weight" 223 and "Carrier" 224. In alternate embodiments, the carrier information 220 can include any suitable or desired information. Once all of the needed information is entered or inputted into the fields, the user can activate or "click" a "Go" button or icon, for example, which then activates the delivery options engine 110 of FIG. 1 to retrieve rate quotes based on the inputted information. In one embodiment, the delivery options engine 110 passes the request to the shipment analysis engine 120. The shipment analysis engine can evaluate whether the request is for third party services information or internal carrier information, or a combination thereof. In one embodiment, if the request includes a request for third party services data, the shipment analysis engine can format the request as needed, and forward the request to the third party services engine 121. The third party services engine 121 can then communicate with third party services and retrieve the requested information and data. The retrieved information is then formatted as needed and communicated back to the user. If the request includes a request for internal carrier information, the shipment analysis engine 120 communicates the request to the internal carrier engine 122. The internal carrier engine retrieves the requested information and communicates the data back to the shipment analysis engine 120. For example, FIG. 3 illustrates one embodiment of the information retrieved and displayed after the input of information shown in FIG. 2. As shown in FIG. 3, the user interface 112 displays a screen 300 that shows rate quotes retrieved that meet the requirements inputted. With respect to the example shown in FIG.2, the quotes shown in FIG. 3 are for all enabled carrier services that meet the "Deliver By" requirement specified in block 222 of FIG. 2. The disclosed embodiments identify the least expensive carrier, in the example block or field 301, and present other carrier-services 302-305, for comparison purposes. The user can "select" the presented "best" service 301, or override the "best" service 301 with an alternative selection from any one of choices 302-305. Once the selection is finalized the user can "click" or activate "ok" 306 to proceed.

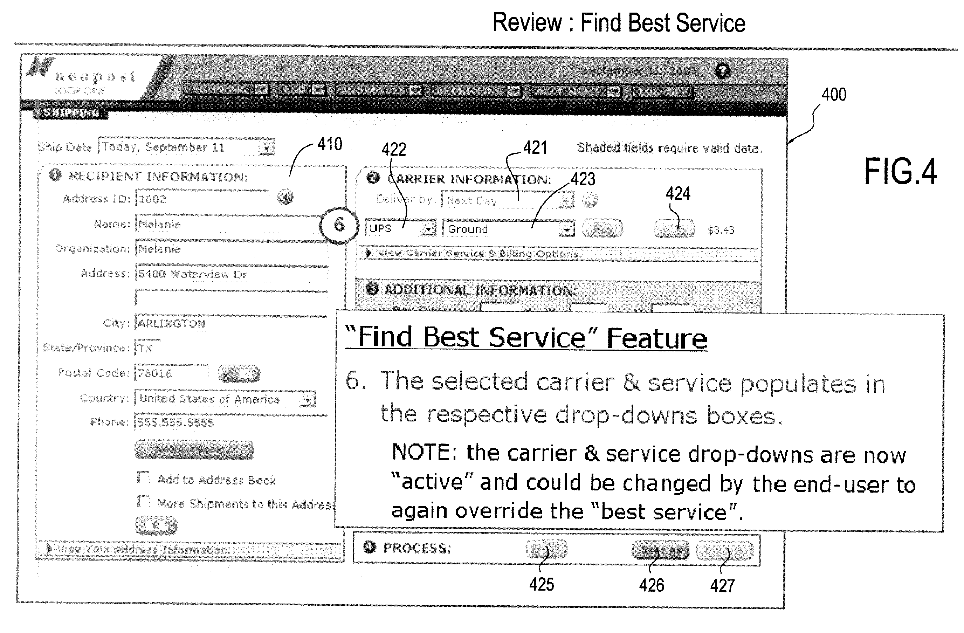

FIG. 4 is an example of one embodiment of the display of the user interface 112 of FIG. 1, after a carrier has been selected. In this example, the selected carrier 422 and service 423 populate the respective "drop down" boxes or fields. In one embodiment, the carrier 422 and service 423 drop-downs are "active". By being "active" the user can override the current selection and choose from another service that is presented in each of the respective drop-down boxes 422, 423.

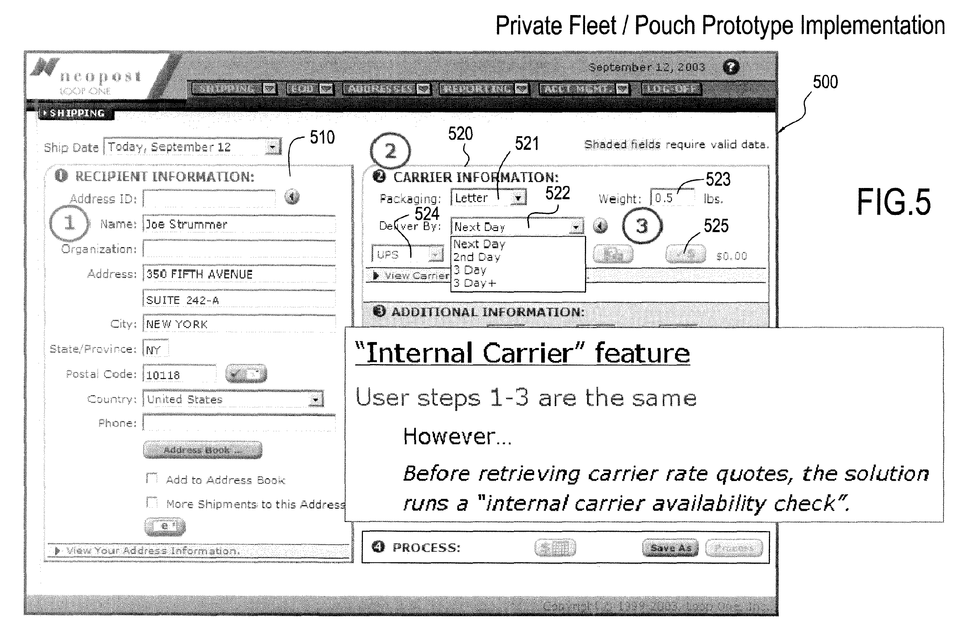

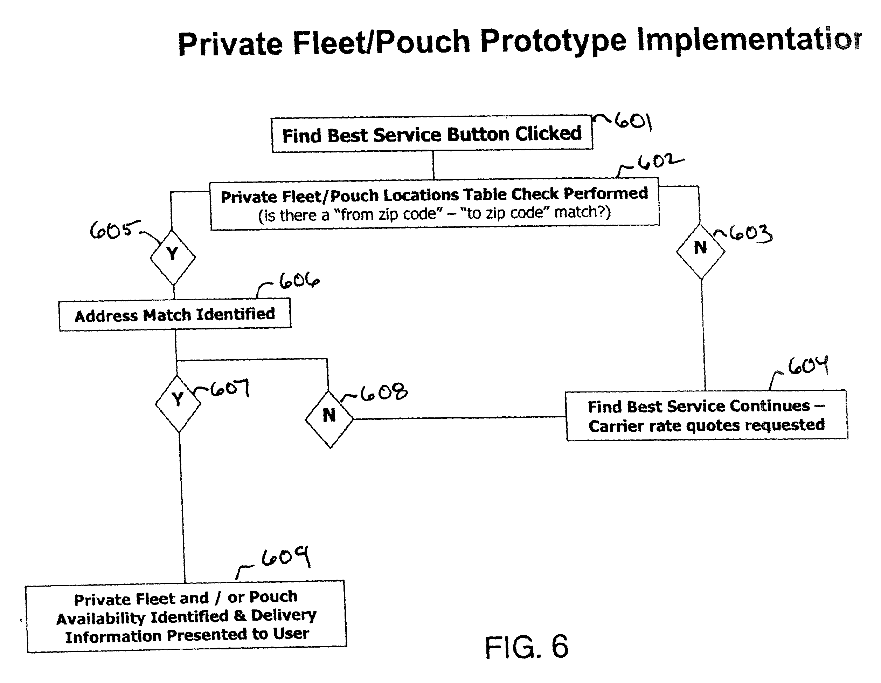

Referring to FIG. 5, one embodiment of a user interface 500 for use with a system 100 of FIG. 1 incorporating features of the disclosed embodiments is illustrated. In this example, the user 102 enters information into the fields 510, 520 in a manner and fashion similar to that described with respect to FIG. 2. However, in this embodiment, prior to retrieving carrier rate quotes, the system 100 runs an internal carrier availability check. One example of a process for an internal carrier check is illustrated with respect to FIG. 6. As shown in FIG. 6, the user 112 has inputted the recipient and carrier information in fields 510 and 520 of FIG. 5, and activated 601 the "Find Best Service" or similar button or icon. In alternate embodiments, any suitable button, icon or mode of activity the "Find Best Service" feature can be used.

It is then determined 602 whether there is a private fleet or pouch service from the shipper destination to the recipient destination. Generally this comprises determining if there is a "from" zone to a "to" zone match. In one embodiment this could include determining if there is a "from" zip code to a "to" zip code match. In alternate embodiments, any suitable means of determining if there is private fleet/pouch shipping from the shipping address area to the destination. If a match is not found 603, the system 100 proceeds to evaluate and retrieve carrier rate quotes as shown with respect to FIG. 3. If however there is a match 605 between Private Fleet/Pouch locations, it is then determined if an address match can be identified 606.

If an address match is not identified 608, the system 110 proceeds to the carrier rate quote retrieval and analysis 604.

If an address match is found 607, the private fleet and/or pouch availability is identified 609, and the delivery information is presented to the user 102.

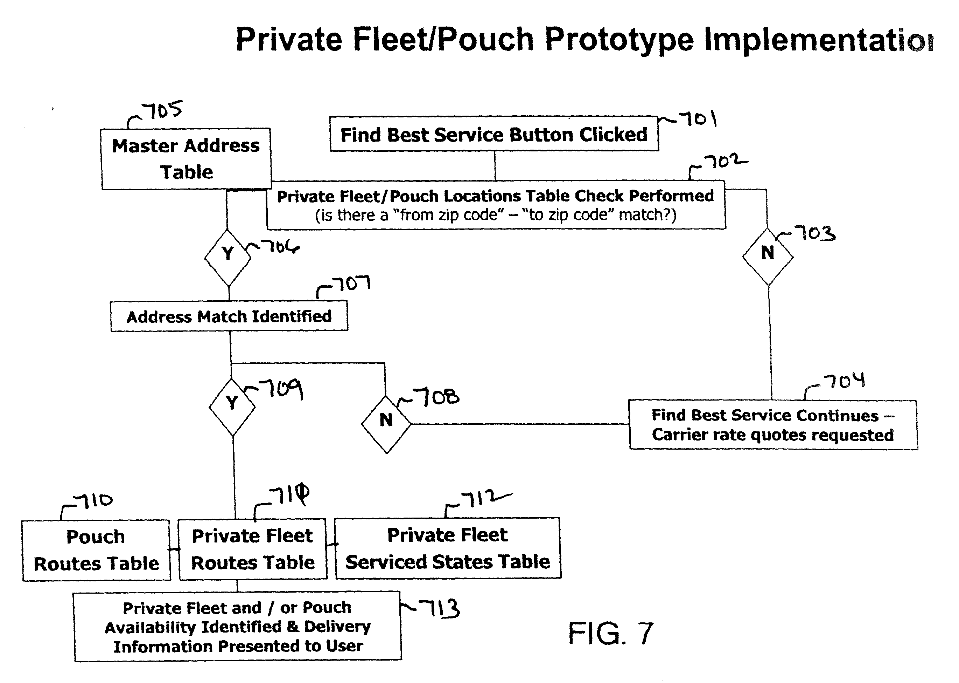

FIG. 7 illustrates an example of another embodiment of the private fleet/pouch availability in a system incorporating features of the disclosed embodiments. In a manner similar to that described with respect to FIG. 6, the recipient and carrier information is entered and a Find Best Service feature is activated 701. A private fleet/pouch location is performed 702. This can involve for example, a table check at "from zip code" to "to zip code", or any other suitable means to determine if private fleet/pouch delivery is available to an area or address.

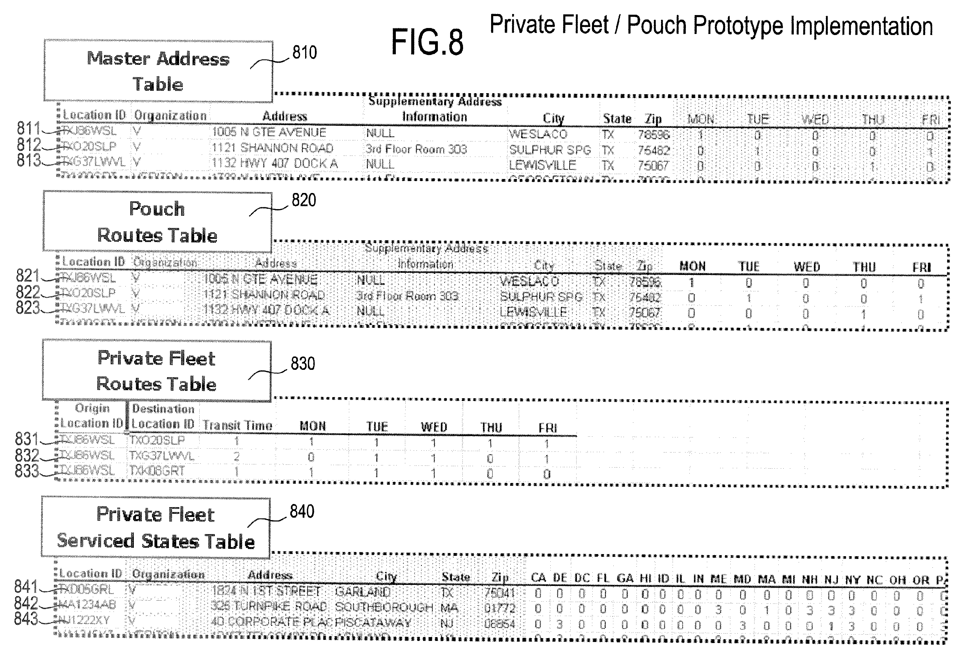

In one embodiment, determining 702 private fleet/pouch locations comprises accessing a Master Address Table 705. FIG. 8 illustrates one embodiment of a Master Address Table 810. The Master Table 810 includes and identifies location information, such as the addresses 811-813 and can be stored, for example, in the Internal Carrier Engine 122. If a location match is not identified 703, the system proceeds with the request, retrieval and evaluation 704 of carrier rate quotes. If a zip code match is identified 706 from the Master Table 811 entries 811-813, it is determined 707 whether there is an address match. If an address match is not 708 identified, the system proceeds to retrieve and analyze 704 carrier rate quotes. If an address match is identified 709, the system can access any one of or each of a Pouch Routes table 710, Private Fleet Routes Table 711 and Private Fleet Serviced States Table 712. Referring to FIG. 8 the Pouch Routes Table 820 can provide information 821-823 related to delivery schedules for specific locations/addresses. The Private Fleet Routes Table 830 can provide information 831-833 related to transit times and schedules between certain origin and destination locations. The Private Fleet Serviced States Table 830 can provide information 831-833 related to transit times and schedules between certain origin and destination locations. The Private Fleet Services States Table 840 can provide information 841-843 related to the states on geographic regions services by the private fleet.

Once the information and data from each of the tables 710-712 is evaluated the Private Fleet and/or Pouch availability and delivery information can be presented 713 to the user.

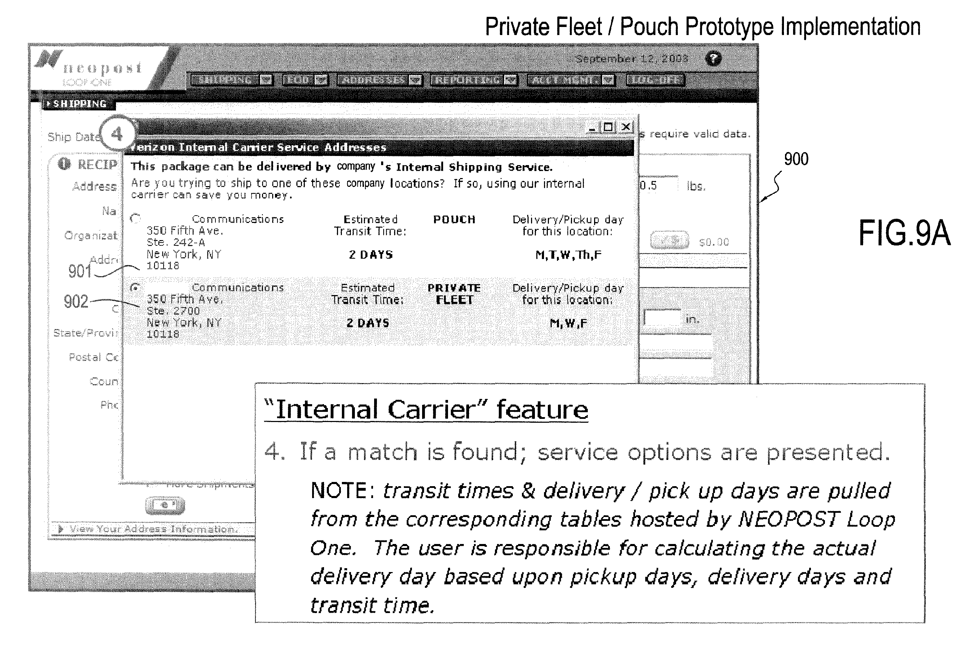

FIG. 9A is an example of how Internal Carrier information can be presented to the user in accordance with features of the disclosed embodiments. As shown in FIG. 9A, the user interface 900 presents internal carrier information 901, 902. The system selects the best or most favorable internal carrier, which in this example is delivery option 902.

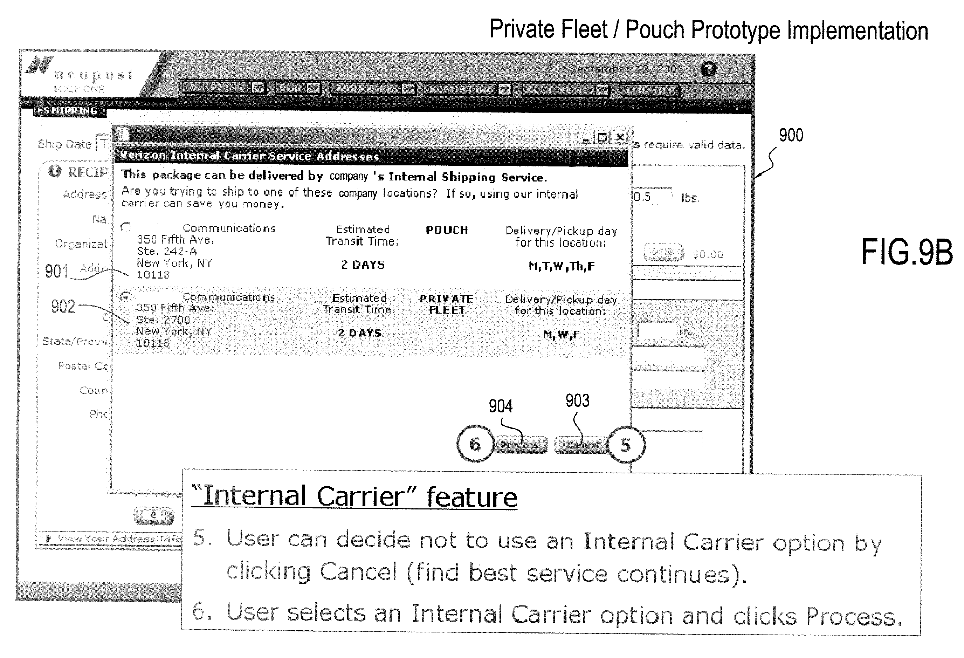

As shown in FIG. 9B, the user can select the "Cancel" option 903 if the user decides not to use an internal carrier, in which case the system continues to evaluate and retrieve carrier rate quotes, reference 704 in FIG. 7, for example.

If the user decides to proceed with an internal carrier, the user selects an internal carrier. In this example carrier option 902 is selected, and the "Process" option 904 is selected.

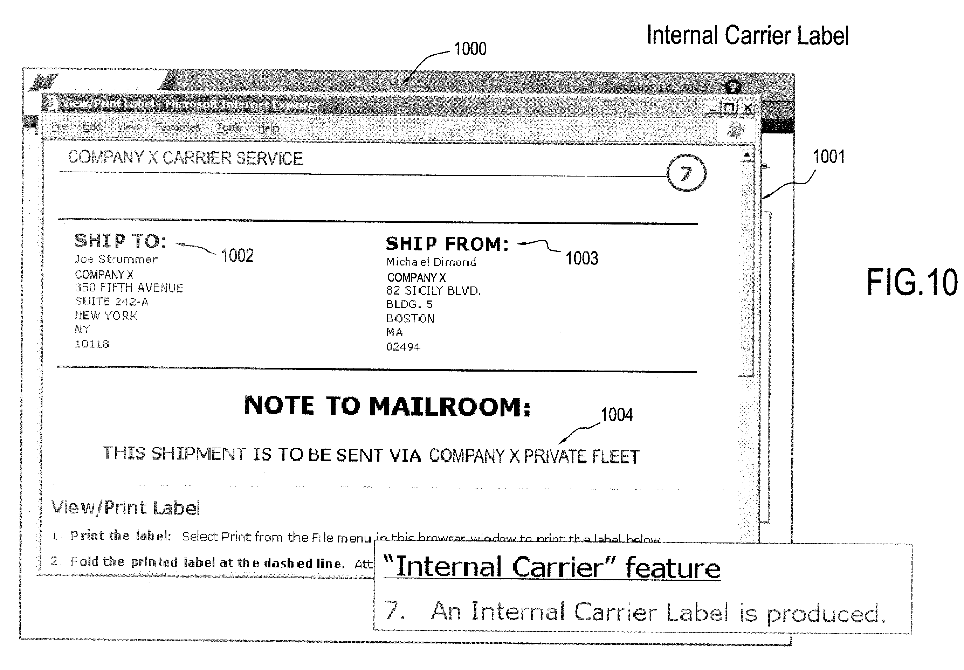

FIG. 10 illustrates one embodiment of an Internal Carrier service label 1001 produced in accordance with features of the disclosed embodiments. The label 1001, identifies the "Ship To" 1002 and "Ship From" 1003 information as well as identifying 1004 that the shipment is to be sent via the company's private fleet.

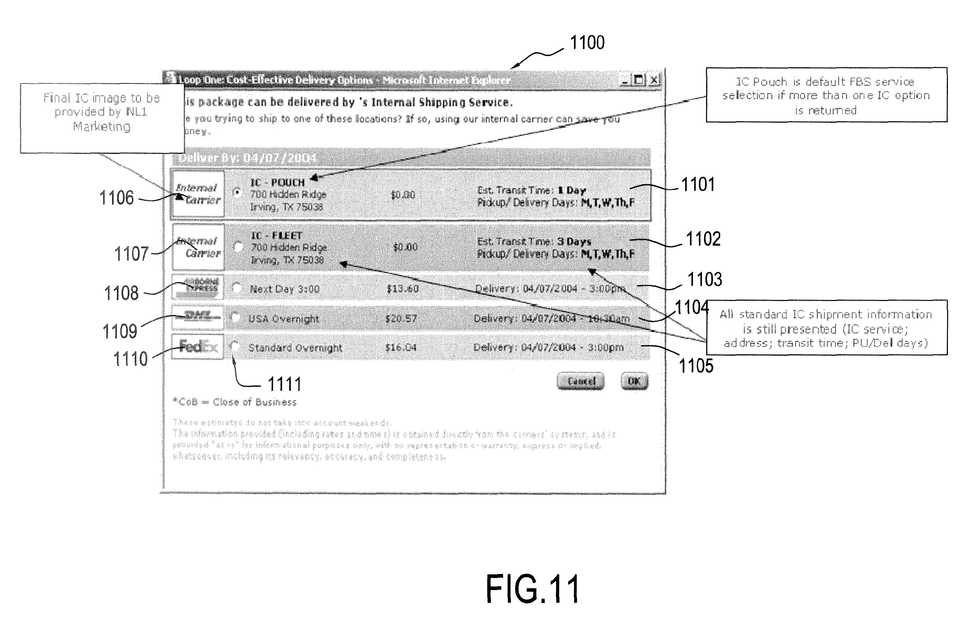

Referring to FIG. 11, in one embodiment the FBS Table 1100 will present available IC delivery option(s) as rows 1101-110 in the FBS table 1100. In alternate embodiments, the information on the table can be presented in any suitable manner. In one embodiment an IC logo/image will be created and placed to the left of a row or such other suitable location in the FBS table that displays an IC service.

IC options (rows) within the FBS table will present all information necessary for the user to determine if the IC service can meet their shipping requirements. This information includes, for example:

The type of IC service (pouch or Fleet)

Location Address (Ship To)

Estimated Transit Time

Location Pickup/Delivery Days 11

A radio button 1111 can be located next to each individual IC service returned. In the event of both an IC Fleet and IC Pouch service option being returned and displayed, then the IC Pouch service will be selected by default as the "best" service meaning that it is the most economically advisable shipping option.

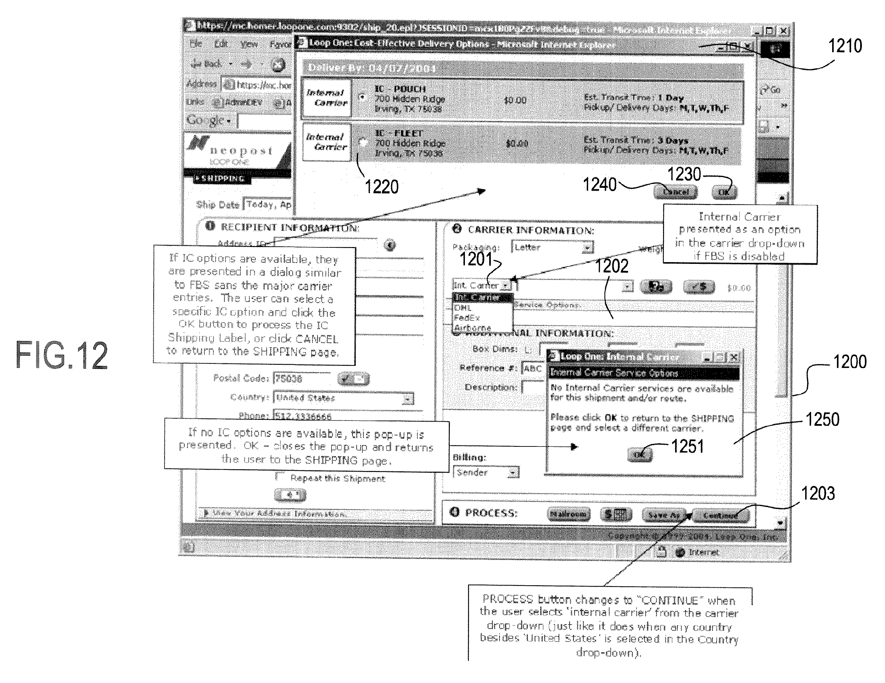

In one embodiment, referring to FIG. 12, the system of the disclosed embodiments allows the user to access only the internal carrier feature and disable the Find Best Service feature.

For example, the user selects the Internal Carrier option in the drop-down box 1201. The SHIPPING pages services drop-down will be blank (no options) and the SHIPPING pages PROCESS button will be replaced by a CONTINUE button 1203.

In one embodiment, a user enters all required SHIPPING page information into Deliver Options Integration Engine 110, via the User Interface 112. The user selects the "Internal Carrier" option and clicks or activates the CONTINUE button. The Delivery Options Integration Engine 110 will execute the IC Search operation.

After completion of the IC search operation, the user interface 1200 of FIG. 12 will present a pop-up 1210 containing the information such as the following, for example:

If any IC service(s) are available

The type of IC service (Pouch or Fleet)

Location Address (Ship To)

Estimated Transit Time

Location Pickup/Delivery Days

A radio button 1220 next to each individual IC service returned is displayed to allow selection of a particular IC. Once an IC is selected, an OK button 1230 can be activated which will cause the system 100 of FIG. 1 to process and display the IC shipping label.

A cancel button 1240 can also be provided, the activation of which will close the pop-up and return the user to the shipping page shown in FIG. 12.

In the event IC services are not available, an alert message 1250 can be displayed that indicates that "No Internal Carrier services are available for this shipment and/or route. Please click OK to return to the SHIPPING page and select a different carrier." An OK button 1251 is available, which if selected, returns the user to the SHIPPING page.

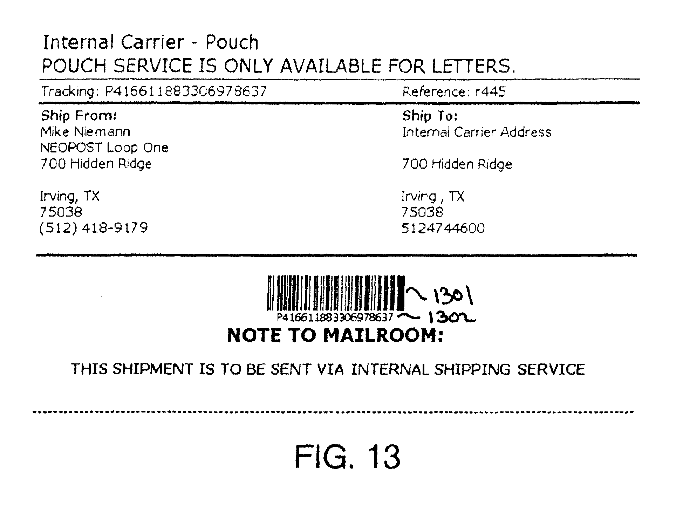

In one embodiment referring to FIG. 13, every IC Fleet and Pouch shipment generated by the system 100 will include a unique barcode 1301. (referred to as "IC barcode" and completely separate from Mailroom completion barcodes).

In one embodiment, the IC barcodes for Fleet shipments can have a prefix of "F" while Pouch shipments which can have a prefix of "P" (Generally, only IC Pouch Shipments can be consolidated and provides a way to distinguish IC Pouch Shipping label barcodes from IC Fleet ones.)

Elements that can be included in IC Pouch Shipping Label shown in FIG. 13 are an "IC barcode" 1301; and a number or alpha-numeric 1302 represented by the "IC barcode" 1301.

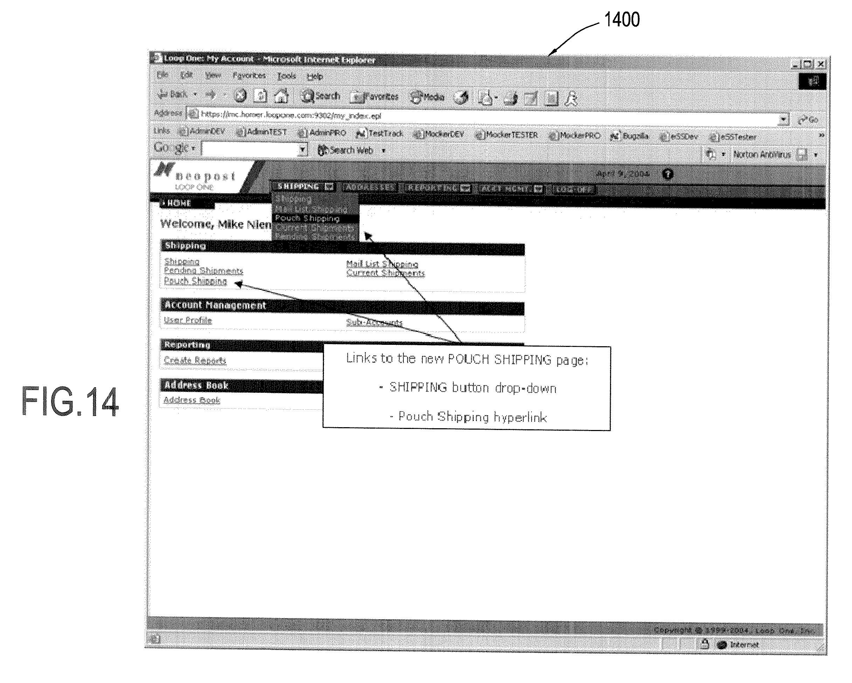

In one embodiment, the delivery options engine 110 will provide and the UI 112 will display a new page named "POUCH SHIPPING" allowing approximately configured Mailroom Admins to create and process consolidated shipments. For example, referring to FIG. 14, the POUCH SHIPPING page 1400 can provide, as for example, capabilities and options such as for example, such as the ability to create new consolidated shipments consisting of multiple IC Pouch shipments.

Generally, only IC Pouch shipments can be added to a consolidated shipment. If an IC barcode with a prefix of "F" is scanned, the user interfere will display an error pop-up with, for example, the following copy: "Fleet shipments are not allowed to be consolidated". The pop-up can include an OK button, which when clicked will return the Mailroom Admin to the POUCH SHIPPING page. Individual IC Pouch shipments can be added (by scanning or manually entering "IC barcodes") to a selected consolidated shipment.

Individual IC Pouch shipments from a consolidated shipment can be removed by selecting checkboxes next to each individual IC Pouch Shipment(s) within a consolidated shipment and clicking a REMOVE button.

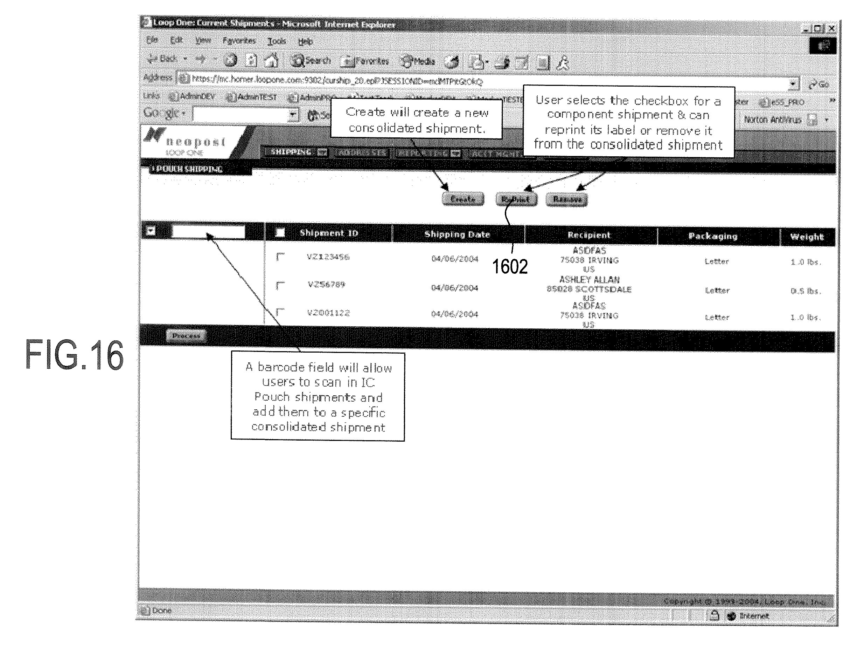

The user interfere can display a confirmation dialog immediately after the REMOVE button is clicked, such as for example, "Are you sure you wish to remove the selected shipments?" An "OK" button confirms the operation and removes the selected shipments. A "CANCEL" button can be used to stop the operation and return the Mailroom Admin to the POUCH SHIPPING page. The ability to display the "IC barcode" value, shipping date, recipient and recipient address, packaging and weight information associated with each IC Pouch shipment added to a consolidated shipment. Referring to FIG. 16, a "REPRINT" button 1602 can be used to reprint any IC Pouch Shipping Label if clicked after checking IC Pouch shipment checkboxes).

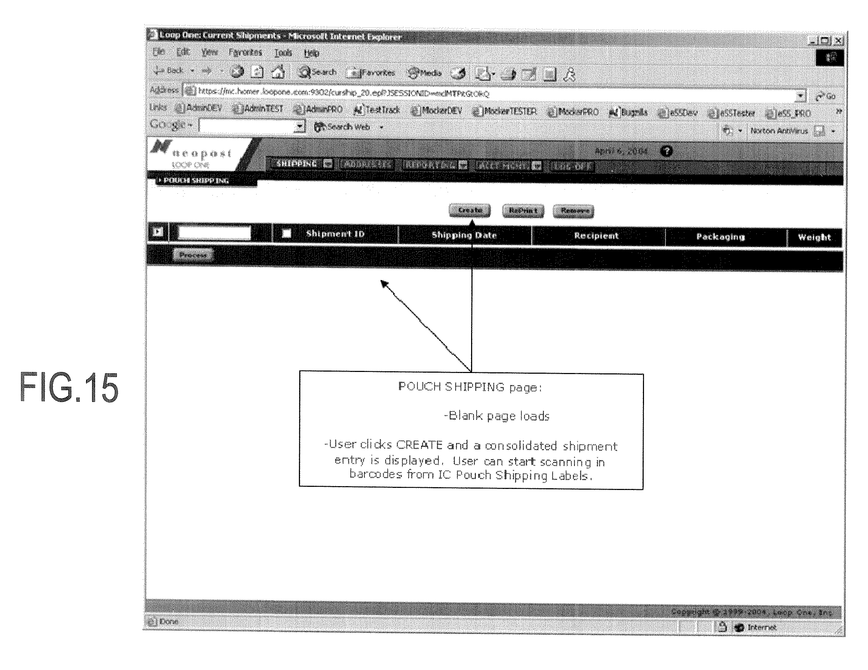

In one embodiment, referring to FIG. 15, a "CONTINUE" button will be displayed for each consolidated shipment created. Clicking the CONTINUE button will take the user to a shipping UI that allows the user to procure a major carrier shipping service for the consolidated shipment (this includes access to all shipping features available on the SHIPPING page). The UI will maintain a direct linkage to the consolidated shipment.

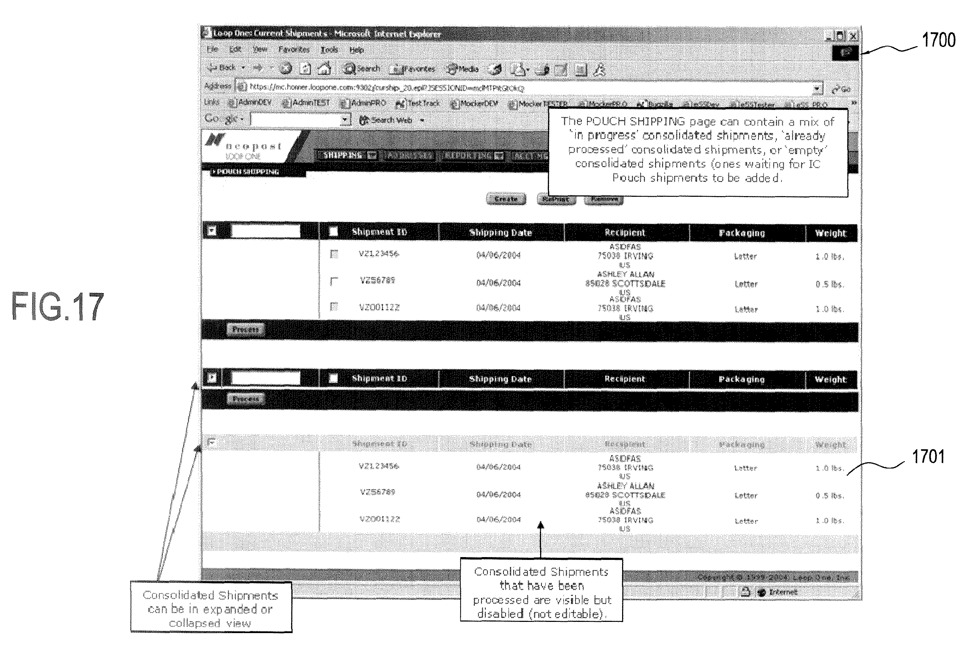

Referring to FIG. 17, after processing the consolidated shipment, its corresponding entry 1702 on the POUCH SHIPPING page 1700 will become inactive (the consolidated shipment and its component IC Pouch shipments will still be viewable, but the Mailroom Admin will be prohibited from adding or removing shipments or reprinting IC Pouch Shipping Labels.) Processed consolidated shipments will remain on the POUCH SHIPPING page until their shipping date has expired. At that point in time, the entry will be removed from the page. If IC Pouch shipments to add an IC Pouch shipment already included in another consolidated shipment, an error message can be displayed, such as: "This shipment cannot be added as it is already included in another consolidated shipment." An OK button will be provided to close the error pop-up. Consolidated shipment entries will be expandable and collapsible to either display or hide its component IC Pouch shipments, respectively.

Once processed, the consolidated shipment can appear on a CURRENT SHIPMENTS page, highlighted for example, in bold (to distinguish it from a one-off shipment). Consolidated shipments can be voided or reprinted from the CURRENT SHIPMENTS page just like one-off shipments.

Once processed, a tracking number generated by the carrier for the consolidated shipment will be associated with each IC Pouch shipment included in the consolidated shipment.

In one embodiment, once the consolidated shipment is processed, if the originators of a component IC Pouch shipment had enabled email notification, the delivery options engine 110 of FIG. 1 can send appropriate email message(s) containing the hyperlinked tracking number corresponding to the consolidated shipment's label.

If a consolidated shipment is voided from the CURRENT SHIPMENTS page, then the corresponding entry on the POUCH SHIPPING page will become enabled (i.e., the Mailroom Admin can add or remove IC Pouch shipments and re-process the consolidated shipment).

An "IC Pouch Shipping DB" can be used to capture and save the information for every IC Pouch shipment. The information saved can include the unique IC barcode for each IC shipment, the sender information (all fields from the "Your Address Information" section of the SHIPPING page), the recipient information (all fields from the "Recipient Information" section of the SHIPPING page), and the tracking number for the consolidated shipment that includes the IC Pouch shipment. In alternate embodiment, any suitable information can be retained.

The disclosed embodiments generally review the client or user provided IC route data to identify the "ship from-ship to" routes where an IC shipping option is available. A text only IC shipping label can be provided for use with the packages so the organizations mailroom can send the package out with the appropriate shipper. The IC services that are available can be displayed prior to processing the IC shipping label. Package tracking capability is available for IC pouch shipments to make user processing of the IC shipping label more valuable. There is tighter integration of the IC options, with the FBS table and configurable rules to control availability.

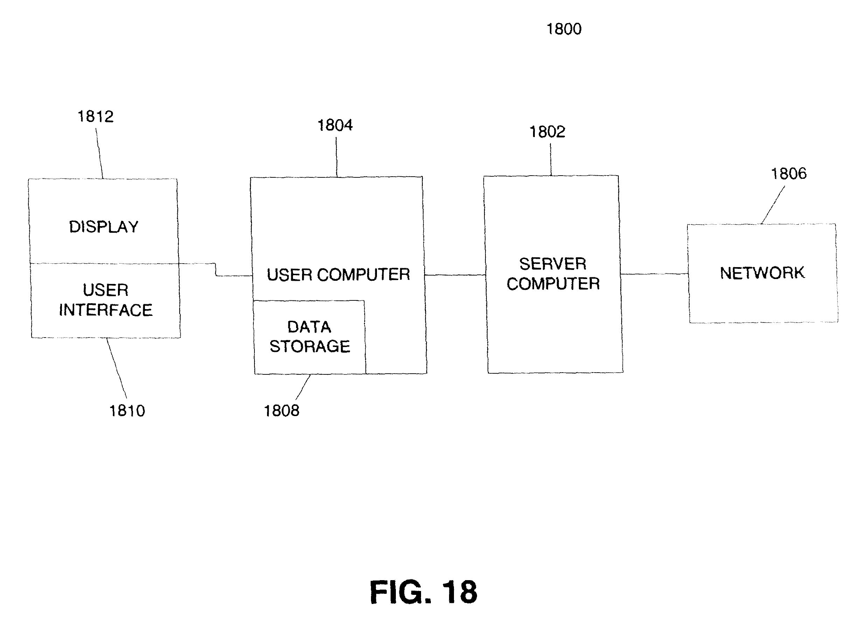

The present invention may also include software and computer programs incorporating the process steps and instructions described above that are executed in different computers. Fig. 18 is a block diagram of one embodiment of a typical apparatus 1800 incorporating features of the present invention that may be used to practice the present invention. As shown, a computer system 1802 may be linked to another computer system 1804, such that the computers 1802 and 1804 are capable of sending information to each other and receiving information from each other. In one embodiment, computer system 18 could include a server computer adapted to communicate with a network 1806, such as for example, the Internet. Computer systems 1802 and 1804 can be linked together in any conventional manner including a modem, hard wire connection, or fiber optic link. Generally, information can be made available to both computer systems 1802 and 1804 using a communication protocol typically sent over a communication channel or through a dial-up connection on ISDN line. Computers 1802 and 1804 are generally adapted to utilize program storage devices embodying machine readable program source code that is adapted to cause the computers 1802 and 1804 to perform the method steps of the present invention. The program storage devices incorporating features of the present invention may be devised, made and used as a component of a machine utilizing optics, magnetic properties and/or electronics to perform the procedures and methods of the present invention. In alternate embodiments, the program storage devices may include magnetic media such as a diskette or computer hard drive, which is readable and executable by a computer. In other alternate embodiments, the program storage devices could include optical disks, read-only-memory ("ROM") floppy disks and semiconductor materials and chips.

Computer systems 1802 and 1804 may also include a microprocessor for executing stored programs. Computer 1804 may include a data storage device 1808 on its program storage device for the storage of information and data. The computer program or software incorporating the processes and method steps incorporating features of the present invention may be stored in one or more computers 1802 and 1804 on an otherwise conventional program storage device. In one embodiment, computers 1802 and 1804 may include a user interface 1810, and a display interface 1812 from which features of the present invention can be accessed. The user interface 1810 and the display interface 1812 can be adapted to allow the input of queries and commands to the system, as well as present the results of the commands and queries.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. An intercompany mail consolidation system comprising:
a delivery option integration engine;
a user interface adapted to allow a user to enter shipping address information for a mailpiece into the integration engine;
a shipment analysis engine adapted to use the shipping address information to determine a best delivery service for the mailpiece; and
an internal carrier review engine adapted to determine if an internal carrier is available to deliver the mailpiece.

2. The system of claim 1 wherein the shipment analysis engine further comprises a communication connection to at least one third party delivery service in order to obtain delivery and rate information.

3. The system of claim 1 further comprising a shipment tracking engine adapted to communicate a selected carrier for tracking a shipment.

4. The system of claim 2 further comprising a service comparison unit in the shipment analysis engines for comparing received third party delivery service information and any internal carrier delivery service information.

5. A method of determining a delivery service for a shipment comprising:
entering address information into a delivery service location system;
entering shipment information;
identifying at least one delivery service option for shipping the shipment;
communicating with at least one third party service to identify cost date related to the shipment;
determining if an internal carrier shipping option is available for the shipment; and
presenting a recommended delivery service option after comparing the third party service date and internal carrier shipping options.

6. The method of claim 5 further comprising, after entering the address information, of comparing the entered address against a list of internal carrier addresses, and determining if the shipment can be sent via inter-fleet service, a company pouch or city-courier.

7. The method of claim 5 further comprising generating an internal carrier shipping label after selection of an internal carrier delivery service option.
